Europäisches Patentamt

European Patent Office

Office européen des brevets

(19)

(11) Numéro de publication: **0 033 263**
**B1**

(12)

# FASCICULE DE BREVET EUROPEEN

(45) Date de publication du fascicule du brevet: **08.01.86**

(51) Int. Cl.⁴: **G 21 C 3/34**

(21) Numéro de dépôt: **81400060.0**

(22) Date de dépôt: **19.01.81**

(54) Grille entretoise pour assemblage combustible de réacteur nucléaire.

(30) Priorité: **22.01.80 FR 8001304**

(43) Date de publication de la demande:
**05.08.81 Bulletin 81/31**

(45) Mention de la délivrance du brevet:
**08.01.86 Bulletin 86/02**

(84) Etats contractants désignés:
**BE CH DE FR GB IT LI NL SE**

(56) Documents cités:
CH-A- 499 850
DE-A-1 564 430
DE-A-1 950 179
FR-A-1 436 977
FR-A-1 465 164
FR-A-1 536 257
FR-A-2 099 595
FR-A-2 168 059
FR-A-2 235 464
FR-A-2 358 727
FR-A-2 366 669
FR-E- 91 358

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(73) Titulaire: **FRAMATOME ET CIE.
Tour Fiat 1, Place de la Coupole
F-92400 Courbevoie (FR)**

(72) Inventeur: **Leclerq, Joseph
30, route de Champagne
F-69370 St Didier (FR)**
Inventeur: **Le Pargneux, Jacques
125, rue Duguesclin
F-69006 Lyon (FR)**
Inventeur: **Feutrel, Claude
105, Grande rue
F-91430 Vauhallan (FR)**
Inventeur: **Lestiboudois, Guy
5, rue Rouget de Lisle
F-75001 Paris (FR)**
Inventeur: **Chantant, Michel
13, rue Jean Mermoz
F-78390 Bois D'Arcy (FR)**

(74) Mandataire: **Mongrédien, André et al
c/o BREVATOME 25, rue de Ponthieu
F-75008 Paris (FR)** ·

Courier Press, Leamington Spa, England. ·

# Description

La présente invention concerne une grille entretoise pour un assemblage combustible utilisé dans un réacteur nucléaire constituée par des plaquettes entrecroisées suivant un réseau à mailles carrées.

Les assemblages combustibles des réacteurs nucléaires, en particulier des réacteurs nucléaires à eau légère, sont généralement constitués par un faisceau de crayons combustibles, c'est-à-dire de tubes en matériau absorbant peu les neutrons remplis par des pastilles de matière fissile, le faisceau étant assemblé grâce à des pièces disposées à chacune des extrémités de l'assemblage. Pour le maintien transversal des crayons combustibles dans le faisceau, on utilise généralement des grilles entretoises constituées par des plaquettes entrecroisées suivant un réseau à mailles carrées, les crayons combustibles passant dans les cellules de la grille. De cette façon, les crayons ont une disposition régulière dans les directions transversales imposées par la grille. Certains des emplacements ménagés par les grilles entretoises, pour les crayons combustibles, sont occupés par des tubes guides qui sont reliés à leurs extrémités aux plaques de l'assemblage pour assurer la cohésion de celui-ci. Chaque cellule définie à l'intérieur des grilles entretoises reçoit soit un crayon combustible, soit un tube guide, soit un tube permettant le passage de l'instrumentation du coeur du réacteur. Le brevet français FR—A—1 536 257 résume cet état connu de la technique.

Pour assurer le maintien transversal des crayons combustibles à l'intérieur des cellules des grilles entretoises, il est nécessaire d'exercer sur ces crayons des forces transversales et pour cela de prévoir des dispositifs portés par les parois des cellules de la grille s'étendant vers l'intérieur de la cellule, ces cellules étant d'une dimension telle qu'un jeu important est ménagé entre le crayon et les parois de la cellule. Ce jeu important est en effet nécessaire pour permettre l'écoulement du réfrigérant et faciliter le montage de l'assemblage.

Les dispositifs de maintien du crayon à l'intérieur des cellules de la grille doivent en particulier permettre un encastrement semi-rigide suffisant des crayons dans les cellules de la grille pour éviter des déplacements et des déformations des crayons de trop grande amplitude ainsi qu'un fléchissement exagéré sous l'effet des déformations d'origine thermique et d'irradiation. Les déformations d'origine thermique sont généralement occasionnées par les gradients de température entre tubes guides, tubes guides et crayons et crayons entre eux, les déformations dues à l'effet d'irradiation résultent d'une certaine dispersion dans les allongements du principalement aux gradients de flux et aux gradients de contrainte. En effet, si la structure de l'assemblage est trop fortement pertubée en service dans le réacteur, la circulation du fluide caloporteur du réacteur risque d'être modifiée et une certaine dissymétrie de cet écoulement peut être introduite localement, si bien que les conditions d'exploitation du réacteur s'écartent des conditions optimales. D'autre par, il faut éviter un encastrement semi-rigide du crayon mettant en oeuvre des forces de serrage trop importantes sur la gaine tubulaire du crayon, des contraintes excessives d'appui sur cette gaine ainsi que des contraintes axiales dans cette gaine produites par les dilatations thermiques différentielles risquant de la détruire au niveau de l'encastrement semi-rigide.

Il faut éviter également un mode de fixation des crayons dans les cellules de la grille qui risque d'introduire une usure exagérée de la gaine de ce crayon sous l'effet des vibrations auxquelles est soumis l'assemblage en service en exerçant dans ce cas une force de serrage relativement importante permettant d'assurer le meilleur moment d'encastrement semi-rigide.

On a donc proposé des dispositifs de maintien des crayons combustibles dans les cellules de grilles entretoises qui avaient pour but de fournir un compromis acceptable entre ces exigences contradictoires.

On a par exemple proposé de réaliser les grilles entretoises en un alliage élastique tel qu'un alliage de nickel ou un acier inoxydable, des ressorts et des butées rigides étant obtenus par découpage et repoussage de certaines portions de plaquettes constituant la grille pour la constitution des dispositifs de retenue des crayons.

Une telle solution présente l'inconvénient d'introduire dans l'assemblage, des grilles d'un volume relativement important en un matériau absorbant fortement les neutrons.

On a proposé également de réaliser les plaquettes constituant les cellules de la grille en un matériau absorbant faiblement les neutrons tel qu'un alliage de zirconium, des éléments de maintien des crayons combustibles étant rapportés sur ces grilles en alliage de zirconium. Ces éléments de maintien peuvent être constitués par des ressorts en alliage élastique et par des butées rigides disposés sur les plaquettes constituant les différentes parois des cellules de la grille, de façon que dans chaque cellule les ressorts soient sur des faces opposées aux faces de ces cellules sur lesquelles sont disposées les butées rigides. C'est le cas dans le brevet français FR—A—2 358 727 qui décrit également une autre grille entretoise pour réacteur nucléaire refroidi à l'eau dans lequel les assemblages de combustible comportent des tubes guides 5. Les ressorts 71, 72 et 73 utilisés pour maintenir axialement les crayons de combustible sont encliquetés dans une ouverture 32 de la paroi 31 de la grille sans glissement possible le long de cette paroi 31. Cette structure a pour inconvénient le report sur la paroi 31 de la totalité des efforts transversaux subis par le ressort.

Pour réaliser cette répartition des ressorts et des butées rigides sur les plaquettes de la grille, on a proposé d'utiliser des ressorts comportant deux parties actives de part et d'autre de la paroi sur laquelle est disposé le ressort pour permettre l'action du ressort sur deux crayons différents à l'intérieur de deux cellules adjacentes. De tels ressorts peuvent être, par exemple, constitués par une lame en matériau élastique entourant la plaquette et refermée sur elle-même.

A ce sujet, le brevet suisse CH—A—499 850 décrit une grille entretoise pour un assemblage combustible de réacteur nucléaire refroidi à l'eau qui comporte un certain nombre de cellules dans lesquelles passent les crayons de combustible pour leur maintien transversal à l'aide de ressorts (4, 10) et de butées (5). Toutefois, une telle grille est régulière car elle s'applique à un coeur de réacteur dépourvu de tubes guides pour le passage de crayons absorbants, comme c'est le cas dans les réacteurs refroidis à l'eau bouillante. Dans les réacteurs refroidis à l'eau légère sous pression au contraire, la présence de tels tubes guides, fixés rigidement à la grille, désorganise la régularité du réseau et implique un mode de répartition des ressorts et des butées équipant les parois des cellules différent d'une cellule à l'autre, au moins dans le voisinage des tubes guides du réseau. La structure décrite dans le document CH—A—499 850 ne permet pas de résoudre ce problème.

Dans chaque cellule, d'une telle réalisation connue à cellules d'un type unique, on associe à deux des parois de la cellule des ressorts doubles et au deux autres parois des butées rigides. Cependant, de tels dispositifs ne permettant pas d'équiper entièrement une grille comportant un nombre impaire de cellules sur chacun de ses côtés et ne permet pas non plus de tenir compte des perturbations apportées, dans la répartition des ressorts équipant les cellules renfermant les crayons combustibles, par es tubes guides disposés dans le réseau dont le mode de fixation sur la cellule est rigide.

A ce titre, on peut citer enfin le FR—A—2 168 059 qui décrit encore une grille d'écartement d'assemblages combustibles pour réacteurs nucléaires refroidis à l'eau. Cette grille comporte des viroles tubulaires 6, 46 de section circulaire et soudées les unes aux autres, contenant chacune soit un crayon combustible 1, soit un tube guide 52. Dans les viroles tubulaires, précédentes, les crayons sont maintenus à l'aide de butées rigides (49) et de ressorts doubles (11, 20, 50). Ces butées et ressorts doubles sont toutefois disposés selon une symétrie à 120° non transposable telle quelle dans un réseau carré; de plus, les tubes guides (52) sont circulaires comme les viroles 6 et en sont indépendants. De ce fait, ils ne pertubent pas la symétrie de l'ensemble du réseau.

L'invention a pour objet une grille entretoise pour un assemblage combustible, utilisée dans un réacteur nucléaire et constituée par des plaquettes entrecroisées suivant un réseau à mailles carrées, dans les cellules de laquelle passent les crayons combustibles pour leur maintien transversal; ces crayons constituent un faisceau où certains crayons sont remplacés par des tubes guides, les plaquettes qui constituent les parois des cellules portant des éléments de maintien des crayons combustibles en saillie vers l'intérieur des cellules et de deux types, à savoir d'une part des butées rigides, d'autre part des ressorts susceptibles d'exercer des forces transversales sur les crayons combustibles, rapportés sur la grille et disposés autour des plaquettes de façon que chacune des faces de chaque cellule renfermant un crayon porte un élément de type différent de celui porté par la face opposée, cette grille devant permettre un maintien efficace des crayons sans conduire à une détérioration des gaines de ces crayons. Selon l'invention, la répartition adéquate des ressorts et des butées rigides est obtenue malgré la présence du tubes guides et un nombre impair de cellules sur chacun des côtés de la grille tout en évitant l'utilisation de trop nombreux éléments de maintien associés aux parois de la grille et une quantité trop importante de matériau absorbant les neutrons pour la constitution de ces éléments de maintien.

Dans ce but, la grille entretoise suivant l'invention comporte:

— sur la plus grande partie des parois équipées de ressorts, des ressorts doubles comportant deux parties actives de part et d'autre de la paroi sur laquelle est placé le ressort double, permettant l'action symétrique de ce ressort sur deux crayons différents à l'intérieur de deux cellules adjacentes;

— sur les autres parois équipées de ressorts, des ressorts simples comportant une seule partie active disposée dans l'une des deux cellules séparées par la paroi sur laquelle est placé le ressort dont l'autre partie qui n'est pas susceptible d'entrer en contact avec un crayon combustible possède au moins une zone de déformation, les deux parties précédentes ayant par ailleurs leurs extrémités soudées et montées libres en glissement par rapport à la plaquette qui les supporte.

Suivant un mode particulier de réalisation de l'invention, les ressorts comportent deux branches disposées de part et d'autre de la paroi sur laquelle ils sont rapportés et soudées entre elles à leurs deux extrémités, de façon que les moments et efforts tranchants exercés sur une des branches soient équilibrés en majeure partie par ceux exercés sur l'autre branche et ne soient pratiquement pas transmis à la plaquette constituant la paroi de la grille.

Suivant un mode préférentiel de l'invention également, les ressorts ont sur leurs parties actives un profil comportant deux parties en saillie vers l'intérieur des cellules de la grille venant en contact avec une des génératrices du crayon en deux points espacés au maximum suivant la longueur de ce crayon et les faces des cellules opposées à ces ressorts à double saillie comportent deux butées rigides disposées approximativement au niveau des saillies des ressorts dans la direction transversale perpendiculaire aux faces des cellules considérées.

Pour favoriser, en outre, le guidage des plaquettes formant les parois des cellules lors de l'assemblage, lesdites plaquettes peuvent être munies de crevés possédant un profil chanfreiné dans le sens de l'introduction desdites plaquettes.

Afin de bien faire comprendre l'invention, on va maintenant décrire à titre d'exemple non limitatif en se reportant aux figures jointes en annexe un mode de réalisation d'une grille entretoise suivant l'invention, dans le cas d'assemblages combustibles pour un réacteur nucléaire à eau légère et les éléments de maintien transversal des crayons combustibles équipant cette grille.

La figure 1 représente une vue de dessus de la grille entretoise.

La figure 2 représente une vue agrandie en élévation d'une plaquette constituant la grille, avant assemblage de la grille.

Les figures 2a, 2b, 2c expliquent un détail du montage des différentes plaquettes constituant les parois des cellules.

La figure 3 représente une vue des dessus de la même plaquette après l'opération de pliage précédant l'assemblage de la grille.

La figure 4 représente un ressort double suivant un premier mode de réalisation dans une vue en élévation.

La figure 5 représente un ressort double suivant un second mode de réalisation, dans une vue analogue à la vue de la figure 4.

La figure 6 est une coupe suivant A—A de la figure 5.

Les figures 7 et 8 représentent des ressorts simples suivant deux modes de réalisation différents et dans des vues en élévation.

La figure 9 représente dans une vue en coupe par un plan vertical, un ressort double de forme simplifiée.

La figure 10 représente également dans une vue en coupe par un plan vertical un ressort simple de forme simplifiée.

La figure 11 est une coupe suivant B—B de la figure 10.

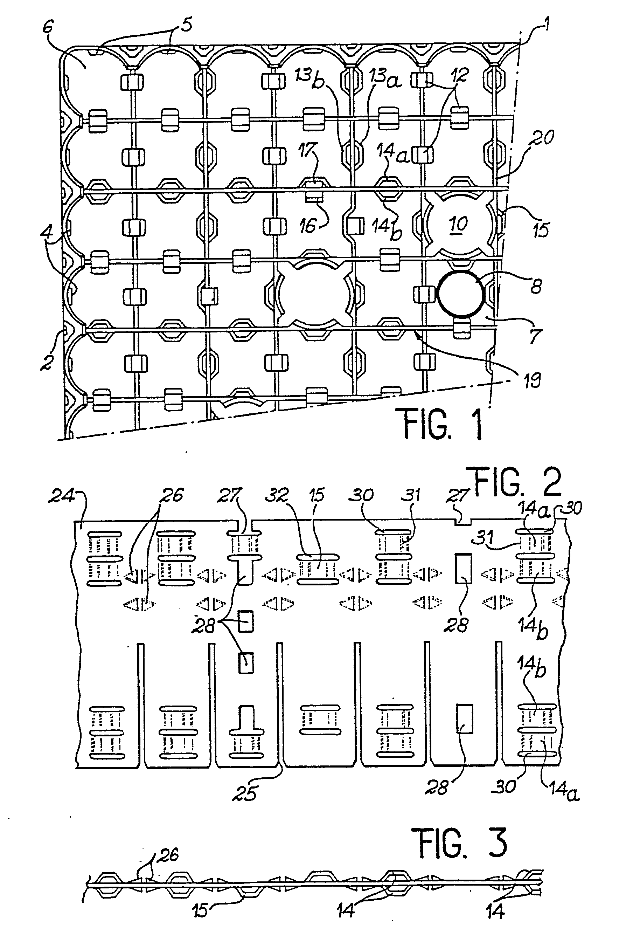

Sur la figure 1, on voit une portion d'une grille pour assemblages combustibles d'un réacteur nucléaire à eau légère au voisinage d'un angle de cette grille. La grille dans son ensemble comporte dix sept cellules suivant chacun des côtés de la grille. La grille est limitée à sa périphérie par des parois telles que 1 et 2 constituées par une plaquette de grande longueur portant des découpes pour la constitution de raidisseurs.

Les parois externes de la grille portent également des butées rigides telles que 4 et 5 au niveau de chacune des cellules sur une paroi en ce qui concerne les cellules des côtés et sur deux parois en ce qui concerne la cellule d'angle 6.

La grille telle que représentée à la figure 1 comporte des cellules 7 pour les éléments combustibles tels que 8 et des cellules 10 pour les tubes guides.

La plus grande partie des cellules 7 dans lesquelles passent les éléments combustibles 8 ont deux parois équipées de ressorts doubles 12 disposés successivement sur le périmètre de la cellule, les deux parois opposées à ces parois équipées de ressorts doubles 12 comportant des doubles butées rigides 13 et 14, les butées rigides 13a et 13b et les butées rigides 14a et 14b respectivement situées sur l'une et l'autre parois étant dirigées vers l'intérieur de la cellule et vers l'intérieur de la celle adjacente disposée de l'autre côté de la paroi considérée.

Les plaquettes des cellules 10 réservées pour le passage des tubes guides ne comportent pas de ressort sur leur paroi mais uniquement des butées rigides 15 dirigées vers les cellules adjacentes et des moyens de liaison vers l'intérieur de la cellule où passe le tube guide pour la fixation rigide de ce tube guide à l'intérieur de la cellule.

Dans un assemblage 17×17, c'est-à-dire un assemblage comportant 17 cellules sur chacun des côtés de la grille, sont disposés 24 tubes guides qui nécessitent évidemment 24 cellules telles que les cellules 10.

Cette présence de cellules 10 dont les parois ne comportent pas de ressort introduit une perturbation dans le réseau des éléments de maintien des crayons combustibles, si bien qu'il est nécessaire de disposer à certains endroits des ressorts simples 16 comportant une seule face active dans l'une des cellules, la cellule adjacente comportant sur la paroi où se trouve le ressort simple une butée rigide 17 ménagée sur la paroi considérée indépendamment du ressort 16.

De la même façon, des ressorts simples 16 sont nécessaires pour tenir compte des perturbations dans la répartition des éléments de maintien transversal causées par le fait que le nombre de cellules sur les côtés de la grille est un nombre impair et que les parois externes de cette grille ne portent que des butées rigides telles que 4 et 5.

Compte tenu des dissymétries inévitables de l'ensemble de la grille dues à la présence des tubes guides, on voit donc que l'ensemble des cellules de celle-ci est réalisé en associant quatre types de parois différentes, à savoir:

— les parois équipées de ressorts sur leurs deux faces;
— les parois équipées de butées rigides sur leurs deux faces;
— les parois mixtes équipées d'un côté de ressorts et de l'autre de butées rigides;
— les parois des cellules de tubes guides équipées de butées rigides sur la face non en contact avec le tube guide.

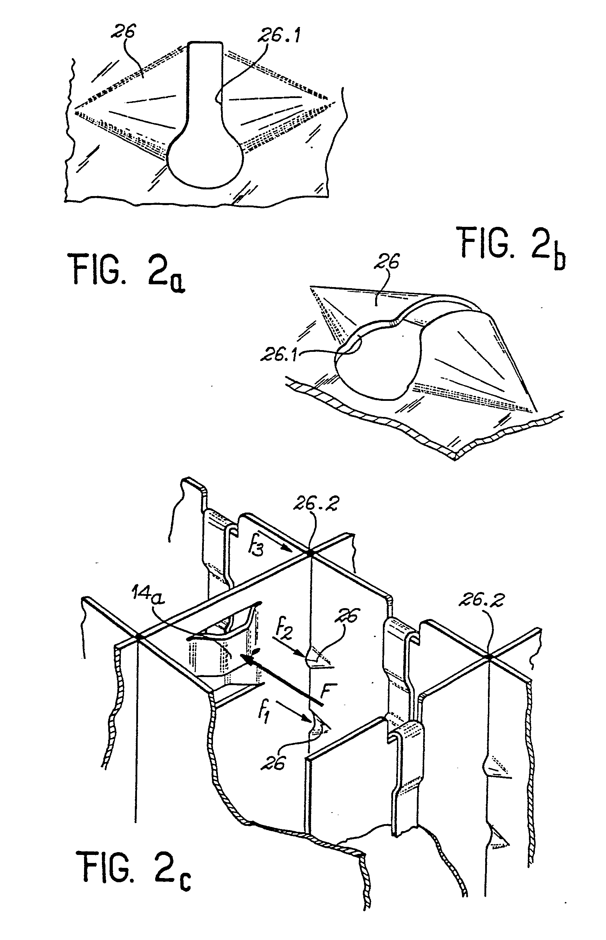

La grille représentée à la figure 1 est constituée par des plaquettes entrecroisées à angle droit 19 et 20, une telle plaquette étant également représentée à la figure 2. Sur la figure 2, la plaquette a été représentée après découpage et avant pliage, ce pliage précédant lui-même l'assemblage de la grille.

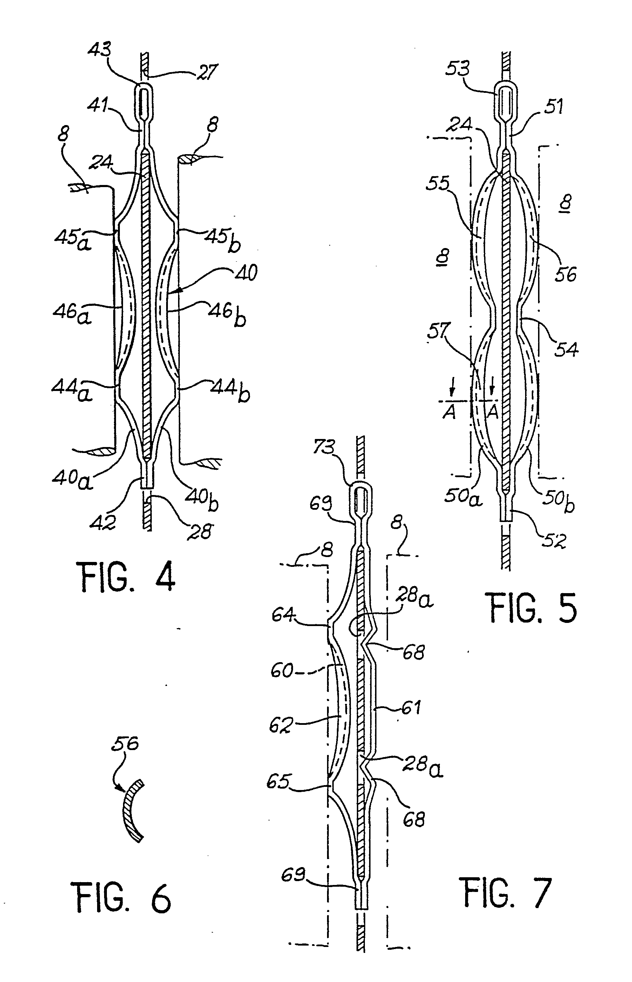

Sur la figure 3, la même plaquette a été représentée en vue de dessus après pliage et repoussage précédant l'opération d'assemblage de la grille.

La plaquette représentée aux figures 2 et 3 est constituée par une bande découpée suivant une forme particulière et présentant une suite de fentes 25 espacées d'une distance égale aux côtés des cellules de la grille.

L'assemblage de la grille se fait par assemblage à mi-fer des plaquettes, de même largeur que la plaquette représentée à la figure 2, introduites réciproquement dans les fentes 25 de manière à définir les cellules de la grille. Ces plaquettes entrecroisées sont solidarisées entre elles après montage par une soudure 26-2 effectuée à chaque angle inférieur et supérieur de la cellule définie.

Lors de l'entrecroisement des plaquettes, des bordes des fentes 25 sont guidés et positionnés par les crevés 26 obtenus par découpage et repoussage de la plaquette représentée à la figure 2.

Les crevés 26 assurent dans une première fonction le guidage des plaquettes lors du montage de ces plaquettes. Afin de faciliter ce guidage, les crevés 26 présentent un profil chanfreiné obtenu directement lors de la découpe de la plaquette.

Les figures 2a et 2b montrent une réalisation de ce guidage obtenue par un prédécoupe de la plaquette en forme de trou de serrure (26-1) qui après formage des crevés présente un profil chanfreiné dans le sens de l'introduction des plaquettes.

La seconde fonction des crevés est d'assurer une répartition des efforts transversaux transmis aux butées rigides (14a et 14b). La figure 2c montre comment le couple induit par les efforts F de deux crayons situés dans deux cellules adjacentes est repris par les réactions d'appui $f_1$ et $f_2$ dans les crevés (26 et par la réaction d'appui $f_3$ au niveau des points de soudure 26-2.

La disposition préférentielle qui consiste à implanter les crevés au voisinage et de chaque côté des butées rigides 14a et 14b permet de répartir les efforts du type $f_1$, $f_2$ et $f_3$.

La plaquette 24 comporte en particulier des ouvertures 27 et 28 pour l'introduction de ressorts constitués sous forme d'épingle qui seront décrits plus en détail ci-dessous.

La plaquette 24 comporte également des ouvertures 30 entre lesquelles le métal est repoussé et plié suivant des arêtes 31 pour constituer des butées rigides repoussées 14 telles que celles qui sont visibles également à la figure 1. Ces butées rigides 14 disposées de part et d'autre de la paroi sont prévues à la partie supérieure et à la partie inférieure de la plaquette 24 pour constituer des butées rigides pour le crayon combustible se trouvant dans la cellule correspondante et venant en contact avec ce crayon en des points éloignés d'une longueur relativement importante par rapport à la hauteur de la plaquette.

La plaquette 24 comporte également des ouvertures 32 permettant le formage par repoussage des butées rigides telles que 14, 15.

La plaquette représentée sur les figures 2 et 3 corrrespond à la plaquette 19 de la grille représentée à la figure 1, sa représentation a été donnée uniquement pour illustrer les différents types de découpes et de butées rigides pratiquées dans les plaquettes constituant la grille.

Sur la figure 4, on a représenté un premier mode de réalisation d'un ressort double, rapporté sur une plaquette 24 telle que la plaquette représentée à la figure 2 et entourant cette plaquette 24 au niveau d'ouvertures telles que 27.

Ce ressort double 40 est constitué sous la forme d'une épingle ayant deux branches 40a et 40b constituées à partir d'une lame pliée sur elle-même et soudée au voisinage des deux extrémités de l'épingle dans des zones 41 et 42.

La partie supérieure de l'épingle constitue une boucle 43.

Les branches 40a et 40b de l'épingle sont symétriques par rapport à la plaquette 24 et comportent dans leurs parties actives deux surfaces d'appui aplaties 44a et 45a, 44b et 45b faisant saillie vers l'intérieur des cellules adjacentes pour venir au contact des crayons 8. Entre ces deux surfaces d'appui 44a et 45a ou 44b et 45b la rigidité de la lame métallique constituant l'épingle-ressort est renforcée par formage des bords 46a et 46b de cette lame qui a, dans cette partie centrale des branches de l'épingle, une section en forme de C.

Les surfaces d'appui 44 et 45 sont éloignées d'une distance dans la direction verticale sensiblement égale à la distance entre les butées rigides 14 ménagées sur les plaquettes 24.

Une épingle ressort double telle que représentée à la figure 4 permet d'appliquer des efforts é1uilibrés grâce à la partie centrale rigide de l'épingle en deux points d'un crayon combustible 8 disposé dans l'une des cellules limitées par la plaquette 24.

Lorsque des efforts transversaux sont appliqués par l'une des branches du ressort sur un crayon combustible, la reprise de ces efforts se fait directement dans l'autre branche de l'épingle ressort puisque celle-ci n'est pas fixée sur la plaquette 24 mais entoure simplement cette plaquette sans serrage de l'épingle sur la plaquette. Cette seconde branche appliquant elle-même des efforts transversaux sur le crayon combustible de la cellule adjacente qu'elle dessert, la reprise de ces efforts se fait directement dans la première branche, définissant ainsi une symétrie des forces exercées sur les deux crayons combustibles.

De cette façon, les efforts transversaux exercés sur les crayons ne sont donc pratiquement pas appliqués sur les plaquettes de la grille, un équilibrage de ces efforts étant possible au niveau de chaque épingle qui travaille ainsi par déformation essentiellement axiale par rapport à la paroi, l'épingle pouvant glisser le long de celle-ci.

Sur la figure 5, on a représenté un ressort double ayant une forme différente de l'épingle ressort représentée à la figure 4 mais effectuant les mêmes fonctions.

Cette épingle ressort 50 comporte également deux branches 50a et 50b dont les parties arrondies supérieure 55 et inférieure 57 font saillie et viennent en contact avec les crayons 8 pour exercer une force transversale sur ces crayons 8.

Les parties supérieure et inférieure arrondies de chacune des branches de l'épingle sont rendues rigides par formage des bords de la lame métallique constituant les deux branches de l'épingle pour obtenir une section en C (56) au niveau de ces parties arrondies ainsi qu'il est visible sur la figure 6.

En revanche, la partie centrale 54 des branches 50 n'est pas rigidifiée et constitué une zone d'articulation entre les deux parties rigides de chacune des deux branches de l'épingle. C'est la déformation de cette partie centrale des deux branches de l'épingle qui vient en léger contact avec la plaquette 24 des branches de l'épingle et permet de reprendre, avec les zones 52 et 51, l'équilibrage des efforts exercés par les crayons 8.

Comme dans l'épingle ressort représentée à la figure 4, les zones supérieure 51 et inférieure 52 sont soudées l'une à l'autre pour solidariser les deux branches de l'épingle autour de la plaquette 24 cependant que la partie supérieure 53 est en forme de boucle.

Comme dans le cas envisagé ci-dessus, les efforts exercés sur les crayons 8 dans les cellules de part et d'autre de la plaquette 24 ne sont que faiblement supportés par cette plaquette 24 et sont en majorité transmis d'une branche à l'autre de l'épingle et de ce fait s'équilibrent en entraînant une déformation essentiellement axiale.

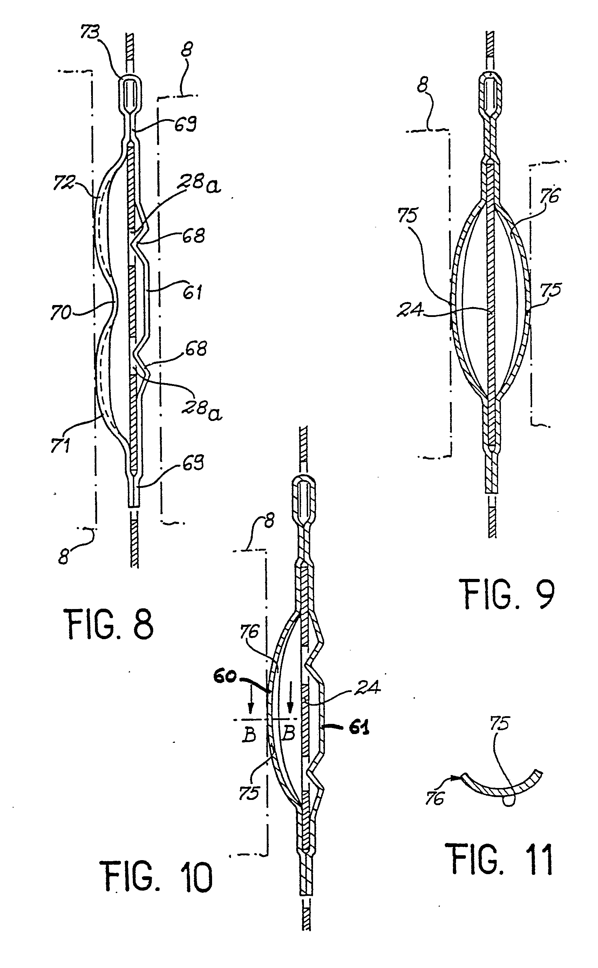

Sur les figures 7 et 8 sont représentés des ressorts simples comportant une seule partie active 60, l'épingle se refermant sur l'autre face de la plaquette 24 par une branche droite 61 qui n'entre pas en contact avec le crayon combustible disposé dans la cellule de la grille correspondante.

La zone centrale 62 de la branche active de l'épingle est rigidifiée par formage de la lame métallique et des surfaces d'appui 64 et 65 sont disposées de part et d'autre de cette partie rigidifiée de la branche de l'épingle.

Le ressort représenté à la figure 8 comporte par contre une zone centrale 70 flexible et deux zones supérieure et inférieure arrondies 71 et 72 venant en contact avec le crayon et rigidifiées par le formage en C de la lame.

Dans le cas des ressorts représentés aux figures 7 et 8, la déformation de la branche active est accomodée par allongement de la branche opposée 61.

L'allongement de la partie active du ressort sous l'effet des efforts transversaux et celui de la branche opposée 61 sont compensés dans le cas des ressorts représentés aux figures 7 et 8 par deux zones de déformation 68.

Dans le cas des ressorts représentés aux figures 7 et 8, des ouvertures 28a pratiquées dans la plaquette 24 permettent d'introduire dans ces ouvertures les parties pliées 68 de la branche 61.

Comme dans le cas des ressorts doubles les zones extrêmes 69 des épingles ressorts sont reliées par soudage et la partie supérieure de l'épingle est constituée par une boucle 73.

Dans le cas des ressorts simples et des ressorts doubles, l'épingle ressort est montée avec jeu sur la plaquette 24 au niveau d'une ouverture 27 permettant de maintenir l'épingle ressort en position sur la plaquette après soudage des extrémités, tout en prévoyant un jeu axial initial important. Ce jeu initial rend très aisé le positionnement des ressorts et autorise une tolérance large sur la distance entre les zones de soudage du ressort à ses extrémités et les découpes 27 de la plaquette. La disposition des ouvertures dans les plaquettes et la forme des épingles permettent un montage et éventuellement un démontage facile de ces épingles lorsque les plaquettes formant la grille sont assemblées. Ceci constitue un avantage pour les opérations de remplacement éventuel d'épingles lors de la fabrication.

Les ressorts sont conçus pour travailler élastiquement avec allongement de l'épingle; les extrémités des ressorts sont donc montées libres en glissement par rapport à la plaquette qui les supporte.

Dans les cas toutefois où des efforts transversaux élevés viendraient à s'exercer sur les ressorts précédents, le report de ces efforts sur les plaquettes de la cellule serait, grâce aux dispositions de l'invention, limité à la seule zone centrale de ces ressorts.

Sur les figures 9 et 10 on a représenté respectivement un ressort double et un ressort simple qui sont montés sur une plaquette 24 de la même façon que les ressorts qui ont été décrits en se référant aux figures 4 à 8 mais qui comportent une seule zone d'appui 75 pour chacune de leur partie active en saillie dans une cellule renfermant un crayon combustible. La rigidité de cette zone d'appui est assurée par pliage des branches 76 de la lame pour obtenir une section en forme de C comme il est visible à la figure 11.

Cette forme simplifiée de ressort ne permet pas d'obtenir un encastrement semi-rigide aussi efficace que lorsque deux zones d'appui de chaque partie active des ressorts sont disposées au niveau de deux butées rigides portées par les faces de la cellule opposées aux faces portant les ressorts. Cependant ce type de ressort peut être suffisant si l'on ne recherche pas un très fort moment d'encastrement semi-rigide pour le crayon combustible au niveau de la cellule de la grille.

Dans le cas d'une grille d'un assemblage 17×17 c'est-à-dire d'un assemblage disposé dans un réseau carré comportant 17 rangées de 17 cellules dont 24 sont occupées par des tubes guides, un par un tube d'instrumentation, et les autres par des crayons combustibles on a utilisé 244 ressorts doubles et 40 ressorts simples du type représenté aux figures 4 et 6 en association avec des butées rigides disposées deux par deux sur les faces des cellules pour réaliser le maintien transversal des crayons combustibles.

On a donc utilisé 284 épingles ressorts pour un total de 528 ressorts, ce qui montre bien la simplification de montage par rapport à un dispositif utilisant préférentiellement des ressorts simples.

On voit donc que les principaux avantages de l'invention sont de permettre un encastrement semi-rigide efficace des crayons combustibles à l'intérieur des cellules de la grille entretoise sans exercer sur ces crayons des pressions importantes qui pourraient provoquer une destruction de la gaine du crayon, de réduire le nombre d'éléments rapportés en matériau absorbant les neutrons tout en permettant un maintien identique de tous les crayons malgré la présence des tubes guides. Dans un assemblage ayant un nombre impair de cellules sur chacun des côtés de la grille l'invention permet un montage simple des éléments de maintien transversal des crayons combustibles sur la grille, ces éléments de maintien ne répercutant pas sur les plaquettes de la grille l'ensemble des efforts transversaux exercés par les crayons combustibles.

Mais l'invention ne se limite pas aux modes de réalisation qui viennent d'être décrits; c'est ainsi qu'on peut réaliser des formes de plaquettes différentes de celles qui ont été décrites.

On peut également rapporter des pièces en matériau identique au matériau des plaquettes soudées aux emplacements voulus. On pourrait également utiliser des rivets fixés sur les plaquettes dont les têtes en saillie à l'intérieur des cellules constitueraient des butées rigides.

On peut de même utiliser pour les ressorts doubles ou les ressorts simples des formes différentes de celles qui ont été décrites. Ces ressorts peuvent en particulier avoir un nombre de points d'appui quelconque destinés à venir en contact avec les crayons combustibles le long d'une génératrice de ces crayons qui sont en contact par l'intermédiaire de la génératrice diamétralement opposée avec des butées rigides en nombre égal ou en nombre différent.

Dans tous les exemples de réalisation de la présente invention, il est judicieux de choisir les matériaux constitutifs des grilles pour réduire au strict minimum l'absorption des neutrons. A cet effet, par exemple, on constitue le plus souvent les plaquettes en un alliage à base de zirconium tel que le zircaloy transparent aux neutrons, et les seuls éléments de maintien rapportés en un alliage à base de nickel tel que l'inconel ou le nimonic à haute résistance mécanique.

Enfin la grille entretoise suivant l'invention est applicable quel que soit le nombre de crayons combustibles dans le réseau et quel que soit le type de réacteur auquel est destiné l'assemblage combustible.

**Revendications**

1. Grille entretoise pour un assemblage combustible utilisée dans un réacteur nucléaire à eau légère sous pression constituée par des plaquettes entrecroisées (19) suivant un réseau à mailles carrées dans les cellules (7) de laquelle passent les crayons combustibles (8) pour leur maintien transversal, ces crayons constituant un faisceau où certains crayons sont remplacés par des tubes guides (10) assurant d'une part la tenue mécanique de l'assemblage et, d'autre part, le guidage des crayons de contrôle de la réactivité, les plaquettes qui constituent les parois des cellules portant des éléments de maintien des crayons combustibles en saillie vers l'intérieur des cellules et de deux types, à savoir d'une part des butées rigides (13, 14) et d'autre part des ressorts (12) susceptibles d'exercer des forces transversales sur les crayons combustibles, rapportés sur la grille et disposés autour des plaquettes de façon que chacune des faces de chaque cellule renfermant un crayon porte un élément de type différent de celui porté par la face opposée, caractérisée par le fait qu'elle comporte:

— sur la plus grande partie des parois équipées de ressorts, des ressorts doubles (12) comportant deux parties actives de part et d'autre de la paroi sur la quelle est placé le ressort double, permettant l'action symétrique de ce ressort sur deux crayons différents à l'intérieur de deux cellules adjacentes;
— sur les autres parois équipées de ressorts, des ressorts simples (16) comportant une seule partie active disposée dans l'une des deux cellules séparées par la paroi sur laquelle est placé le ressort dont l'autre partie qui n'est pas susceptible d'entrer en contact avec un crayon combustible possède au moins une zone de déformation (68), les deux parties précédentes ayant par ailleurs leurs extrémités soudées et montées libres en glissement par rapport à la plaquette qui les supporte.

2. Grille entretoise suivant la revendication 1, caractérisée par le fait que les ressorts simples comportent deux branches (61, 60) disposées de part et d'autre de la paroi et soudées entre elles à leurs deux extrémités de façon que les moments et efforts tranchants soient équilibrés en majeure partie par ceux de l'autre branche et ne soient pratiquement pas transmis à la plaquette (24) constituant la paroi de la grille sur laquelle les extrémités des ressorts peuvent glisser librement.

3. Grille entretoise suivant l'une quelconque des revendications 1 et 2 caractérisée par le fait que les ressorts travaillent essentiellement par déformation axiale sans reporter les efforts transversaux sur les plaquettes constituant les parois des cellules de la grille.

4. Grille entretoise suivant l'une quelconque des revendications 1, 2 et 3, caractérisée par le fait qu'une partie des ressorts au moins ont sur leurs parties actives une forme profilée comportant deux parties en saillie (44, 45, 55, 57) vers l'intérieur des cellules de la grille venant en contact avec une des génératrices du crayons (8) en deux points espacés au maximum suivant la longueur de ce crayon.

5. Grille entretoise suivant la revendication 4, caractérisée par le fait que les ressorts présentent dans leur partie en saillie (55, 57, 75) une section en forme de C.

6. Grille entretoise suivant la revendication 4, caractérisée par le fait que les parties en saillie des ressorts venant en contact avec les crayons sont séparées par une partie rigide (46a, 46b) à section en forme de C permettant l'équilibrage des efforts entre les deux zones en contact.

7. Grille entretoise suivant l'une quelconque des revendications 4 et 5, caractérisée par le fait que les parties en saillie (55, 57) des ressorts venant en contact avec le crayon sont séparées par une zone d'articulation (54) à faible rigidité pour la reprise d'une partie au moins des efforts exercés sur la partie active du ressort.

8. Grille entretoise suivant l'une quelconque des revendications 1, 2 et 3, caractérisée par le fait qu'une partie au moins des ressorts ont sur leur partie active (75) un profil comportant une seule partie en saillie vers l'intérieur des cellules de la grille venant en contact avec le crayon (8) en un seul point de ce crayon.

9. Grille entretoise suivant la revendication 9, caractérisée par le fait que la partie (75) en saillie des ressorts a une section en forme de C.

10. Grille entretoise selon la revendication 1, caractérisée en ce que, pour favoriser le guidage des plaquettes (19, 20) formant les parois des cellules lors de l'assemblage, lesdites plaquettes sont munies de crevées (26) possédant un profil chanfreiné dans le sens de l'introduction desdites plaquettes.

**Patentansprüche**

1. Abstandshalter für ein in einem Druckwasser-Reaktor verwendetes Brennstabbündel, welcher von sich entsprechend einem Netz mit quadratischen Maschen kreuzenden Platten (1) gebildet ist, durch dessen Zellen die Brennstäbe (8) zur Querhalterung hindurchgehen, wobei diese Stäbe ein Bündel bilden, wobei gewisse Stäbe durch Führungsrohre (10) ersetzt sind, die einerseits die mechanische Stabilität des Bündels und andererseits die Führung von Steuerstäben für die Reaktivität sicherstellen, wobei die Platten, die die Wände der Zellen bilden, Elemente zum Halten der Brennstäbe mit Vorsprung zum Inneren der Zellen tragen und zwar zwei Arten, nämlich einerseits steife Anschläge (13, 14) und andererseits Federn (12), mit denen Querkräfte auf die Brennstäbe ausübbar sind und die auf den Abstandshalter angebracht sind und an den Platten derart angeordnet sind, daß jede Seite einer jeden einen Stab einschließenden Zelle ein Element von einer Art trägt, die unterschiedlich von derjenigen der von der gegenüberliegenden Seite getragen ist, dadurch gekennzeichnet, daß der Abstandshalter umfaßt:

— an einem größten Teil der mit Federn ausgerüsteten Wände doppelte Federn (12), die auf diesen Seiten der Wand, an die die doppelte Feder angeordnet ist, zwei aktive Abschnitte aufweisen, die eine symmetrische Wirkung dieser Feder auf zwei verschiedene Brennstäbe im Inneren zweier benachbarter Zellen ermöglichen,

— an den übrigen mit Federn ausgerüsteten Wänden einfache Federn (16), die einen einzigen aktiven Abschnitt aufweisen, der in einer der zwei Zellen angeordnet ist, die durch die Wand getrennt sind, an der die Feder angeordnet ist, wobei der andere Abschnitt, der nicht in Berührung mit einem Brennstab kommen kann, wenigstens einen Verformungsbereich (68) aufweist, wobei die Enden der vorgenannten zwei Abschnitte übrigens verschweißt und frei verschiebbar in Bezug auf die sie tragende Platte angebracht sind.

2. Abstandshalter nach Anspruch 1, dadurch gekennzeichnet, daß die einfachen Federn zwei Arme (61, 60) aufweisen, die beidseitig der Wand angeordnet und an ihren zwei Enden derart miteinander verschweißt sind, daß die Quermomente und Querkräfte zum größten Teil durch diejenigen des anderen Armes ausgeglichen sind und praktisch nicht auf die Platte (24) übertragen werden, die die Wand des Abstandshalters bildet, auf der die Enden der Federn frei gleiten können.

3. Abstandshalter nach Anspruch 1 oder 2, dadurch gekennzeichnet, daß die Federn im wesentlichen durch axiale Verformung arbeiten, ohne die transversalen Kräfte auf die Platten zu übertragen, die die Wände der Zellen des Abstandshalters bilden.

4. Abstandshalter nach einem der Ansprüche 1 bis 3, dadurch gekennzeichnet, daß die aktiven Abschnitte von wenigstens einem Teil der Federn eine Profilform aufweisen, die zwei zum Inneren der Zellen des Abstandshalters vorspringende Abschnitte (44, 45, 55, 57) aufweisen, die mit einer der Erzeugenden der Stäbe (8) an zwei maximal beabstandeten Punkten in Längsrichtung des Brennstabes in Berührung kommen.

5. Abstandshalter nach Anspruch 4, dadurch gekennzeichnet, daß die Federn in ihrem vorspringenden Abschnitt (55, 57, 75) einen C-förmigen Querschnitt aufweisen.

6. Abstandshalter nach Anspruch 4, dadurch gekennzeichnet, daß die vorspringenden Abschnitte der Federn, die mit den Brennstäben in Berührung kommen, durch einen steifen Abschnitt (46a, 46b) mit C-förmigem Querschnitt getrennt sind, der den Kräfteausgleich zwischen den zwei Berührungsbereichen erlaubt.

7. Abstandshalter nach Anspruch 4 oder 5, dadurch gekennzeichnet, daß die vorspringenden Abschnitte (55, 57) der Federn, die mit dem Brennstab in Berührung kommen, durch einen Schwenkbereich (54) geringer Steifigkeit getrennt sind, um wenigstens einen Teil der auf den aktiven Federabschnitt ausgeübten Kräfte aufzunehmen.

8. Abstandshalter nach einem der Ansprüche 1 bis 3, dadurch gekennzeichnet, daß wenigstens ein Teil der Federn auf ihrem aktiven Abschnitt (75) ein Profil aufweisen, welches einen einzigen zum Inneren der Zellen des Abstandshalters vorspringenden Abschnitt aufweist, der mit dem Brennstab (8) an einem einzigen Punkt dieses Brennstabes in Berührung kommt.

9. Abstandshalter nach Anspruch 9, dadurch gekennzeichnet, daß der vorspringende Abschnitt (75) der Federn einen C-förmigen Querschnitt aufweist.

10. Abstandshalter nach Anspruch 1, dadurch gekennzeichnet, daß, um die Führung der Platten (19, 20), die die Wände der Zellen bilden, beim Zusammenbau zu unterstützten, die Platten mit Ausbauchungen (26) versehen sind, die in Einführrichtung dieser Platten ein eingeschnittenes Profil aufweisen.

**Claims**

1. Spacer grid for a fuel assembly employed in a pressurised light water nuclear reactor comprising intersecting plates (19) forming a grid of rectangular units, in whose cells (7) the fuel rods (8) are transversely held, said rods constituting a bundle in which certain rods are replaced by guide tubes (10) ensuring on the one hand the mechanical integrity of the assembly and, on the other hand, guidance of the reactivity-control rods, the plates which constitute the walls of the cells carrying fuel rod support elements extending into the interior of the cells and which are of two types, one type being rigid members (13, 14) and the other type being springs (12) adapted to exercise transverse forces on the fuel rods, carried on the grid and disposed around the plates whereby each surface of each cell containing a rod carries an element of a type different from that carried on the opposite surface, characterised in that it comprises:

— over the major proportion of the walls having springs, double springs (12) comprising two active parts on respective sides of the wall in which the double spring is located, permitting symmetrical action of said spring on two different rods in the interior of two adjacent cells;
— on the other walls having springs, simple springs (16) comprising a single active portion located in one of the two cells separated by the wall on which the spring is located, the other part which is not adapted to contact a fuel rod having at least one deformation zone (68), the two preceding parts having ends which are welded, and freely and slideably mounted with respect to the plate supporting them.

2. Spacer grid according to Claim 1, characterised in that the simple springs comprise two limbs (61, 60) located on either side of the wall and welded together at their two ends whereby the transverse moments and forces are substantially equilibrated between the respective branches and are substantially not transmitted to the plate (24) constituting the wall of the grid over which the ends of the springs are able to slide freely.

3. Spacer grid according to either of Claims 1 and 2, characterised in that the springs act substantially by axial deformation without transmission of transverse forces to the plates constituting the walls of the cells of the grid.

4. Spacer grid according to any one of Claims 1, 2 and 3 characterised in that at least a portion of the springs have their active springs in a profiled form comprising two parts (44, 45, 55, 57) extending towards the interior of the cells of the grid coming into contact with one of the generatrices of the rods (8) at two points which are maximally spaced lengthwise of the rod.

5. Spacer grid according to Claim 4, characterised in that the springs have a C-section in their projecting portion (55, 57, 75).

6. Spacer grid according to Claim 4, characterised in that the projecting portion of the springs coming into contact with the rods, are separated by a rigid portion (46a, 46b) having a C-section providing equilibration of the forces between the two contacting zones.

7. Spacer grid according to either of Claims 4 and 5, characterised in that the projecting portion (55, 57) of the springs coming into contact with the rod are separated by a jointed zone (54) of low rigidity for the absorption of at least a portion of the forces exerted on the active portion of the spring.

8. Spacer grid according to any one of Claims 1, 2 and 3, characterised in that at least a part of the springs have in their active portion (75) a profile comprising a single part projecting towards the interior of the cells of the grid coming into contact with the rod (8) at a single point of the rod.

9. Spacer grid according to Claim 9 characterised in that the projecting portion (75) of the springs has a C-section.

10. Spacer grid according to Claim 1, characterised in that to facilitate guidance of the plates (19, 20) forming the walls of the cells during their assembly, said plates have domed sections having a chamfered profile in the direction of introduction of said plates.

FIG. 1

FIG. 2

FIG. 3

FIG. 2a

FIG. 2b

FIG. 2c

FIG. 4

FIG. 5

FIG. 6

FIG. 7

FIG. 8

FIG. 9

FIG. 10

FIG. 11